# EUROPEAN PATENT APPLICATION

(11) **EP 1 686 530 A1**
(43) Date of publication of application: **02.08.2006**
(21) Application number: 05028590.7
(22) Date of filing: 28.12.2005
(51) Int. Cl.: G06T 1/00, H04N 1/21

(54) **Systems and methods for reconciling image metadata**

(30) Priority: 28.01.2005 US 46119
(71) Applicant: Microsoft Corporation, Redmond WA 98052 (US)
(72) Inventor: Dart, Scott E., Redmond, WA 98052 (US); Evans, Christopher A., Redmond, WA 98052 (US); Silver, David Michael, Redmond, WA 98052 (US); Xu, Jingyang, Redmond, WA 98052 (US); Williams, Samuel Thomas, Redmond, WA 98052 (US)
(74) Representative: Goddar, Heinz J.

(57) **Abstract**

System and methods are herein disclosed for reconciling image metadata in an image file between different metadata schemas, both in the utilization of said metadata by an application or device, as well as proactively reconciling conflicts when detected in said image file. Several embodiments are directed to logically reconciling conflicting metadata between two or more metadata components related to read or write operations of said metadata by applications or devices. Several other embodiments are directed to proactively finding conflicts in metadata components of a file and proactively reconciling them for present and future utilization of said file.

## Description

### FIELD OF THE INVENTION

The present invention generally relates to image files comprising metadata. More specifically, the present invention is directed to systems and methods for reconciling image metadata in an image file, both in utilization of said metadata by an application or device (e.g., read from and/or written to), as well as proactively reconciling conflicts in the metadata for the file when detected.

### BACKGROUND OF THE INVENTION

As known and appreciated by those of skill in the art, an image file generally comprises both image data (for reconstructing a pixilated image, e.g., a bitmap) and metadata (for describing the image and the image file). Image data is stored in accordance with one of several standard image formats (e.g., JPEG, TIFF, GIF, etc.) while metadata is stored in accordance with one or more fixed image metadata schemas (e.g., EXIF, IPTC, XMP, etc.).

The several metadata schemas have largely been developed independently for separate purposes. For example, the EXIF metadata schema pertains to digital photography and comprises information pertaining to the camera that created the file, the date the picture was taken, and so on and so forth. In contrast, the IPTC metadata schema pertains to images used in publishing and comprises information pertaining to captions, keywords, people, ratings, and so forth relevant to publishing. On the other hand, the XMP metadata schema (created by Adobe Systems Inc.) is a metadata schema that describes several properties of the image file including meaningful descriptions and titles, searchable keywords, and up-to-date author and copyright information, and also including all of the properties of the EXIF and IPTC schemas as well as other unique properties not included in the other metadata schemas.

Although an image file typically has only image data for a single standard image format, it may nevertheless have metadata for more than one metadata schema, e.g., a JPEG file may have EXIF, IPTC, and XMP metadata. These different metadata components are often created, maintained, and utilized by separate application programs (or the like) that utilize metadata from one or more metadata schemas when utilizing said file.

Unfortunately, several devices and application program only use one metadata component present in an image file (e.g., to read from and/or write to said file) and make no utilization of the other metadata components that may be present and available in said file. However, several fields in each of these metadata components may overlap, and thus inconsistencies can arise when different applications or devices update corresponding fields in different metadata components separately. This becomes particularly problematic for other applications or devices that can utilize (read from and/or write to) more than one metadata component. For example, if one application updates the caption for an image in EXIF metadata and a second application separately updates the caption for an image in IPTC metadata, then a third application that can utilize both EXIF and IPTC metadata faces a conflict with regard to the separate and different caption information in each metadata component. Similarly, an application or device that can use information in more than one metadata component is faced with the question of which schema to use, and a similar problem also exists for proactively reconciling image metadata inconsistencies when discovered.

What is needed in the art are systems and methods for reconciling image metadata between different metadata components in an image file, both in reconciling conflicts in said metadata when utilized as well as proactively preventing and correcting conflicts when found.

### SUMMARY OF THE INVENTION

Various embodiments of the present invention are directed to system and methods for reconciling image metadata in an image file between different metadata schemas, both in the utilization of said metadata by an application or device, as well as proactively reconciling conflicts when detected in said image file. Several embodiments are directed to logically reconciling conflicting metadata between two or more metadata components related to read or write operations of said metadata by applications or devices. Several other embodiments are directed to proactively finding conflicts in metadata components of a file and proactively reconciling them for present and future utilization of said file. In addition, certain embodiments of the present invention are specifically directed to logic for storing metadata in a manner that complies with each of the separate standards, as well as certain alternative embodiments that of logic for resolving conflicts between metadata when read.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

Fig. 1 is a block diagram representing a computer system in which aspects of the present invention may be incorporated;

Fig. 2 is a block diagram illustrating the general structure of a typical image file comprising multiple metadata schemas;

Fig. 3 is a process flow diagram illustrating a method representative of several embodiments of the present invention for writing new or updated metadata to an image file; and

Fig. 4 is a process flow diagram illustrating a method representative of several embodiments of the present invention for reading metadata from an image file and reconciling any inconsistencies that may exist for different metadata schemas having overlapping metadata components.

### DETAILED DESCRIPTION OF ILLUSTRATIVE EMBODIMENTS

The inventive subject matter is described with specificity to meet statutory requirements. However, the description itself is not intended to limit the scope of this patent. Rather, the inventor has contemplated that the claimed subject matter might also be embodied in other ways, to include different steps or combinations of steps similar to the ones described in this document, in conjunction with other present or future technologies. Moreover, although the term "step" may be used herein to connote different elements of methods employed, the term should not be interpreted as implying any particular order among or between various steps herein disclosed unless and except when the order of individual steps is explicitly described.

### Computer Environment and Devices

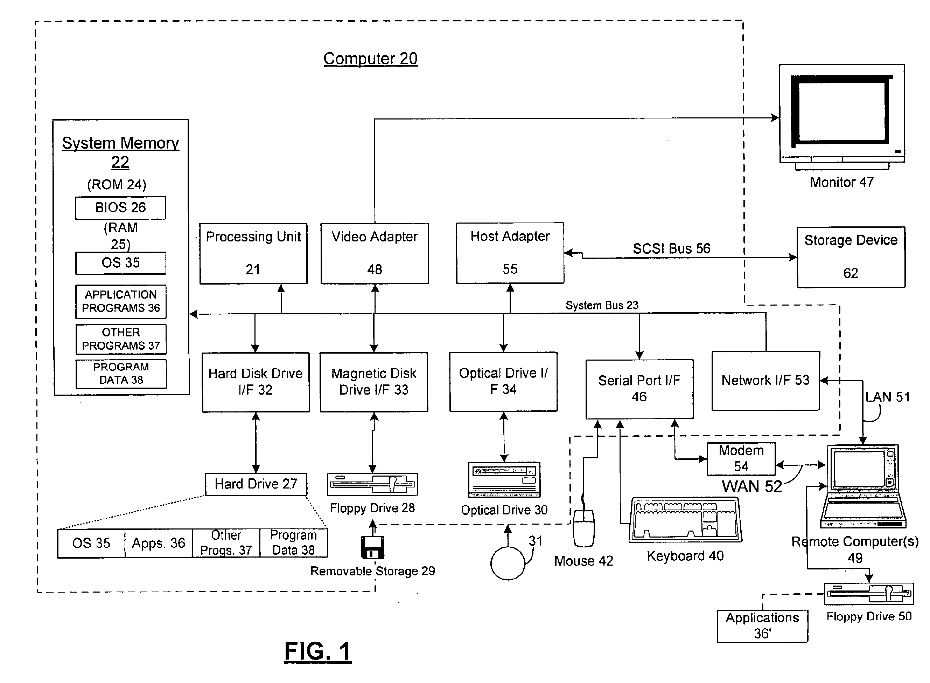

Numerous embodiments of the present invention may execute on a computer or pseudo-computer device. Fig. 1 and the following discussion is intended to provide a brief general description of a general computing environment in which the invention may be implemented. Although not required, the invention will be described in the general context of computer executable instructions, such as program modules, being executed by a computer, such as a client workstation or a server. Generally, program modules include routines, programs, objects, components, data structures and the like that perform particular tasks or implement particular abstract data types. Moreover, those skilled in the art will appreciate that the invention may be practiced with other computer system configurations, including hand held devices, multi processor systems, microprocessor based or programmable consumer electronics, network PCs, minicomputers, mainframe computers and the like. The invention may also be practiced in distributed computing environments where tasks are performed by remote processing devices that are linked through a communications network. In a distributed computing environment, program modules may be located in both local and remote memory storage devices.

As shown in Fig. 1, an exemplary general purpose computing system includes a conventional personal computer 20 or the like, including a processing unit 21, a system memory 22, and a system bus 23 that couples various system components including the system memory to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system 26 (BIOS), containing the basic routines that help to transfer information between elements within the personal computer 20, such as during start up, is stored in ROM 24. The personal computer 20 may further include a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer readable media provide non volatile storage of computer readable instructions, data structures, program modules and other data for the personal computer 20. Although the exemplary environment described herein employs a hard disk, a removable magnetic disk 29 and a removable optical disk 31, it should be appreciated by those skilled in the art that other types of computer readable media which can store data that is accessible by a computer, such as magnetic cassettes, flash memory cards, digital video disks, Bernoulli cartridges, random access memories (RAMs), read only memories (ROMs) and the like may also be used in the exemplary operating environment.

A number of program modules may be stored on the hard disk, magnetic disk 29, optical disk 31, ROM 24 or RAM 25, including an operating system 35, one or more application programs 36, other program modules 37 and program data 38. A user may enter commands and information into the personal computer 20 through input devices such as a keyboard 40 and pointing device 42. Other input devices (not shown) may include a microphone, joystick, game pad, satellite disk, scanner or the like. These and other input devices are often connected to the processing unit 21 through a serial port interface 46 that is coupled to the system bus, but may be connected by other interfaces, such as a parallel port, game port or universal serial bus (USB). A monitor 47 or other type of display device is also connected to the system bus 23 via an interface, such as a video adapter 48. In addition to the monitor 47, personal computers typically include other peripheral output devices (not shown), such as speakers and printers. The exemplary system of Fig. 1 also includes a host adapter 55, Small Computer System Interface (SCSI) bus 56, and an external storage device 62 connected to the SCSI bus 56.

The personal computer 20 may operate in a networked environment using logical connections to one or more remote computers, such as a remote computer 49. The remote computer 49 may be another personal computer, a server, a router, a network PC, a peer device or other common network node, and typically includes many or all of the elements described above relative to the personal computer 20, although only a memory storage device 50 has been illustrated in Fig. 1. The logical connections depicted in Fig. 1 include a local area network (LAN) 51 and a wide area network (WAN) 52. Such networking environments are commonplace in offices, enterprise wide computer networks, intranets and the Internet.

When used in a LAN networking environment, the personal computer 20 is connected to the LAN 51 through a network interface or adapter 53. When used in a WAN networking environment, the personal computer 20 typically includes a modem 54 or other means for establishing communications over the wide area network 52, such as the Internet. The modem 54, which may be internal or external, is connected to the system bus 23 via the serial port interface 46. In a networked environment, program modules depicted relative to the personal computer 20, or portions thereof, may be stored in the remote memory storage device. It will be appreciated that the network connections shown are exemplary and other means of establishing a communications link between the computers may be used. Moreover, certain computerized systems may comprises only a subset of components described herein, such as the computerized components of a digital camera or other photographic capturing, editing, rendering, or production device. However, while it is envisioned that numerous embodiments of the present invention are particularly well-suited for computerized systems and photographic equipment comprising computer and pseudo-computer components, nothing in this document is intended to limit the invention to such embodiments.

### Reconciling Image Metadata

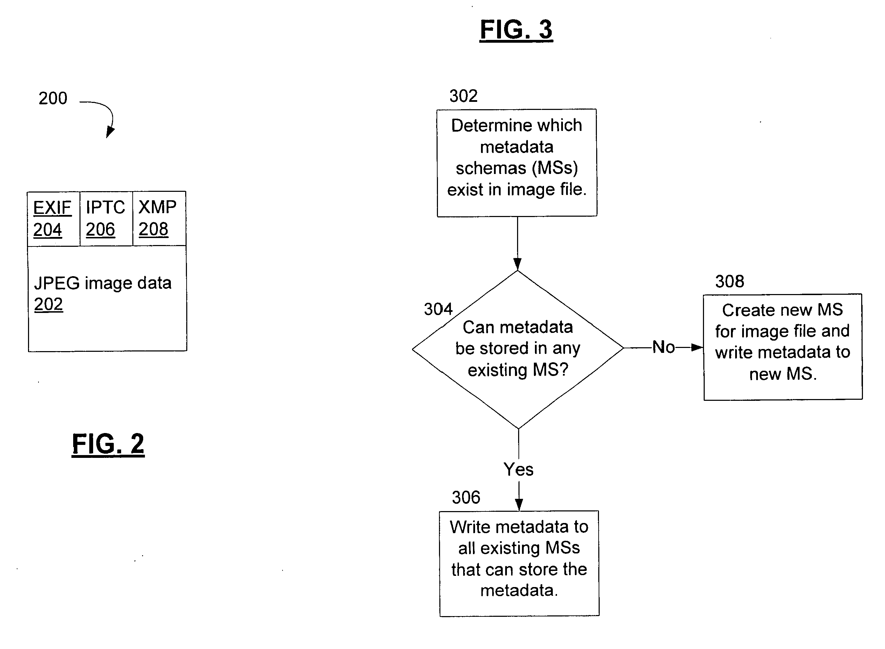

Fig. 2 is a block diagram of an image file 200 comprising both image data 202 and multiple metadata schemas 204, 206, and 208. In this figure, the image data 202 is data in any standard image format such as TIFF, GIF, or, in this example, JPEG. The image file 200 further comprises EXIF image metadata 204, IPTC image metadata 206, and XMP image metadata 208, each of which comprises several metadata components (not shown) which may or may not overlap with the metadata components of other metadata schemas.

While several devices and applications only support the utilization of a subset of metadata schemas (and often just a single schema) and/or utilize only a subset of the metadata contained therein said schema(s), more robust devices and applications may not be so limited and thus the issue would arise of which metadata schemas such dynamic devices should read from and/or write to. Several embodiments of the present invention are directed to systems and methods for reading from or writing to metadata schema(s) of an image file. More specifically, certain embodiments of the present invention are directed to methods of writing metadata to an image file to prevent creating inconsistencies among different metadata schemas in a single image file having overlapping metadata components, while other embodiments of the present invention are directed to reconciling inconsistencies discovered when reading from different metadata schemas in a single image file having overlapping metadata components.

Fig. 3 is a process flow diagram illustrating a method representative of several embodiments of the present invention for writing new or updated metadata to an image file. For these several embodiments, the application or device attempts to maintain the existing set of schemas in an image file if possible without writing to (i.e., creating) new schemas.

In the figure, at step 302 an application or device having new or updated metadata that needs to be written to an image file first determines which schemas already exist in the image file. At step 304, the application or device then ascertains whether the desired metadata to be written to said image file can be adequately stored in the existing metadata schemas for that file. If so, then at step 306 the application or device writes the new or revised metadata to every schema to the extent that each such metadata schema can adequately store the new or revised metadata. If not, then at step 308 the application or device then adds a new metadata schema to the image file and write the new or revised metadata to that new metadata schema.

For certain embodiments, the new metadata schema that might be added would be the most expressive metadata schema available, that is, the metadata schema having the most robust structure and metadata component overlap with other metadata schemas such that, in general, the metadata schema might comprise most (if not all) of the metadata components of the other metadata schemas. For example, in an image file having an IPTC metadata schema, a new most-experssive metadata schema could be XMP because XMP can store all metadata that IPTC can store as well as all metadata that EXIF can store, and thus from the metadata schema group comprising EXIF, IPTC, and XMP, XMP would be the richest metadata schema and thus the one selected.

For certain alternative embodiments of the present invention, the method would instead always add the richest metadata schema available and update both that new metadata schema and any existing metadata schemas with the new metadata. For certain other alternative embodiments, the method would never add a new schema and would always write the new metadata the existing metadata schemas to the maximum extent possible. For several of these embodiments, the relative ranking of metadata schemas from most expressive to least expressive on a schema-by-schema basis may be predefined, whereas for several other embodiments it may be determined real-time. For several other embodiments, the relative ranking of metadata schemas from most expressive to least expressive may be predefined on a metadata component-by-component basis, whereas for several other embodiments it may be determined real-time.

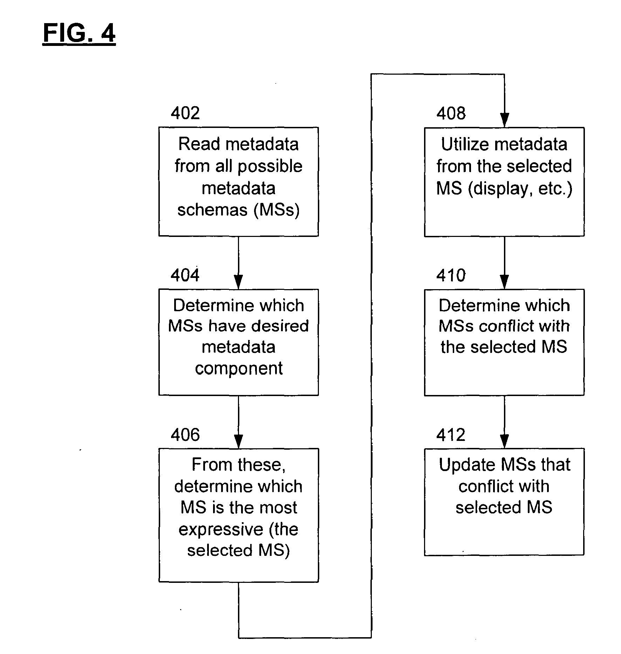

Fig. 4 is a process flow diagram illustrating a method representative of several embodiments of the present invention for reading metadata from an image file and reconciling any inconsistencies that may exist for different metadata schemas having overlapping metadata components. For these several embodiments, the application or device attempts to reconcile any conflicts in the existing set of schemas in an image file if possible and correct those inconsistencies in said image file.

In the figure, at step 402 an application or device reads the metadata from each metadata schema present in the image file (or at least from all of the metadata schemas known and understood by the application or device). At step 404, the application or device then ascertains which metadata schemas have the desired metadata component and, at step 406, further ascertains which is the most expressive metadata schema from among those having the desired metadata component. At step 408, the application or device then reads the metadata component from this single metadata schema. At step 410, the application or device then ascertains which other metadata schemas having this same metadata component having conflicting metadata and, at step 412, updates the metadata component in each such metadata schema with the metadata from the metadata component from the selected, most expressive metadata schema having said metadata component.

For certain alternative embodiments of the present invention, instead of updating the non-selected metadata schemas with the metadata from the selected metadata schema, the metadata components from the non-selected metadata schemas would instead by zeroed-out (e.g., overwritten with a null value). Moreover, several alternative embodiments of the present invention are specifically directed to applications or devices that proactively access files and reconcile metadata inconsistencies without directly making use of the metadata.

For several embodiments of the present invention, the relative ranking of metadata schemas from most expressive to least expressive on a schema-by-schema basis may be predefined, whereas for several other embodiments it may be determined real-time. For several other embodiments, the relative ranking of metadata schemas from most expressive to least expressive may be predefined on a metadata component-by-component basis, whereas for several other embodiments it may be determined real-time.

### Conclusion

The various systems, methods, and techniques described herein may be implemented with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computer will generally include a processor, a storage medium readable by the processor (including volatile and non-volatile memory and/or storage elements), at least one input device, and at least one output device. One or more programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

The methods and apparatus of the present invention may also be embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, a video recorder or the like, the machine becomes an apparatus for practicing the invention. When implemented on a general-purpose processor, the program code combines with the processor to provide a unique apparatus that operates to perform the indexing functionality of the present invention.

While the present invention has been described in connection with the preferred embodiments of the various figures, it is to be understood that other similar embodiments may be used or modifications and additions may be made to the described embodiment for performing the same function of the present invention without deviating there from. For example, while exemplary embodiments of the invention are described in the context of digital devices emulating the functionality of personal computers, one skilled in the art will recognize that the present invention is not limited to such digital devices, as described in the present application may apply to any number of existing or emerging computing devices or environments, such as a gaming console, handheld computer, portable computer, etc. whether wired or wireless, and may be applied to any number of such computing devices connected via a communications network, and interacting across the network. Furthermore, it should be emphasized that a variety of computer platforms, including handheld device operating systems and other application specific hardware/software interface systems, are herein contemplated, especially as the number of wireless networked devices continues to proliferate. Therefore, the present invention should not be limited to any single embodiment, but rather construed in breadth and scope in accordance with the appended claims.

Finally, the disclosed embodiments described herein may be adapted for use in other processor architectures, computer-based systems, or system virtualizations, and such embodiments are expressly anticipated by the disclosures made herein and, thus, the present invention should not be limited to specific embodiments described herein but instead construed most broadly. Likewise, the use of synthetic instructions for purposes other than processor virtualization are also anticipated by the disclosures made herein, and any such utilization of synthetic instructions in contexts other than processor virtualization should be most broadly read into the disclosures made herein.

## Claims

1. A method for reconciling, in a single image file, inconsistencies between at least two metadata schemas having a common overlapping metadata component, said method comprising:
comparing the overlapping metadata component from each metadata schema to determine if a conflict exists; and
if a conflict exists, selecting the metadata component from one metadata schema (the "selected schema") for utilization.

2. The method of claim 1 wherein the selected metadata schema is the most expressive metadata schema from among the at least two metadata schemas.

3. The method of claim 2 wherein the most expressive metadata schema is predefined.

4. The method of claim 2 wherein the most expressive metadata schema is XMP.

5. The method of claim 1 wherein the selected metadata schema is the metadata schema with the most expressive metadata component from among the at least two metadata schemas.

6. The method of claim 1 further comprising, if a conflict exists, updating at least one other metadata schema that is not the selected schema with the metadata component from the selected schema.

7. The method of claim 1 further comprising, if a conflict exists, updating at least one other metadata schema that is not the selected schema by zeroing-out the metadata component of said metadata schema.

8. The method of claim 1 wherein elements of said method are embodied as a system comprising at least one subsystem for performing one or more elements of said method.

9. The method of claim 1 implemented by a hardware control device, said hardware control device comprising means for implementing each element of said method.

10. A computer-readable medium comprising computer-readable instructions for reconciling, in a single image file, inconsistencies between at least two metadata schemas having a common overlapping metadata component, said computer-readable instructions comprising instructions for:
comparing the overlapping metadata component from each metadata schema to determine if a conflict exists; and
if a conflict exists, selecting the metadata component from one metadata schema (the "selected schema") for utilization.

11. The computer-readable medium of claim 10 further comprising instructions whereby the selected metadata schema is the most expressive metadata schema from among the at least two metadata schemas.

12. The computer-readable medium of claim 10 further comprising instructions whereby the selected metadata schema is the metadata schema with the most expressive metadata component from among the at least two metadata schemas.

13. A method for writing metadata to a single image file having at least two metadata schemas, said method comprising:
if said metadata can be adequately written to any of said at least two metadata schemas, then writing said metadata to all of said at least two metadata schemas capable of storing said metadata; and
if said metadata cannot be adequately written to any of said at least two metadata schemas, then adding a new metadata schema to said image file and writing said meta to said new metadata schema.

14. The method of claim 13 wherein said new metadata schema is the most expressive metadata schema that can be added to said image file.

15. The method of claim 14 wherein the most expressive metadata schema is predefined.

16. The method of claim 14 wherein the most expressive metadata schema is XMP.

17. The method of claim 13 wherein elements of said method are embodied as a computer-readable instructions in a computer-readable medium.

18. The method of claim 13 wherein elements of said method are embodied as a system comprising at least one subsystem for performing one or more elements of said method.

19. The method of claim 13 implemented by a hardware control device, said hardware control device comprising means for implementing each element of said method.
